# EUROPEAN PATENT APPLICATION

(11) **EP 2 042 722 A2**
(43) Date of publication of application: **01.04.2009**
(21) Application number: 07117309.0
(22) Date of filing: 26.09.2007
(51) Int. Cl.: F02M 25/025

(54) **Method for increasing the efficiency of an internal combustion engine, supply system for an internal combustion engine implementing said method and perfected internal combustion engine**

(30) Priority: 25.06.2007 IT VI20070182
(71) Applicant: Zecchin, Pierino, 37030 Ronca (VR) (IT)
(72) Inventor: Zecchin, Pierino, 37030 Ronca (VR) (IT)
(74) Representative: Bonini, Ercole

(57) **Abstract**

The invention is a method (1) for increasing the efficiency of an internal combustion engine comprising a combustion chamber associated with fuel mixture delivery ducts and exhaust gas outlet ducts. The method includes a stage (5) for introducing water (W) in the combustion chamber.

## Description

The present invention concerns a method for increasing the efficiency of an internal combustion engine, particularly suitable for explosion engines like, for example, Otto engines and diesel engines.

The invention also concerns a water supply system implementing said method, as well as a perfected internal combustion engine including said water supply system.

An internal combustion engine of known type comprises one or more combustion chambers, each one of which is associated with fuel mixture delivery ducts and exhaust gas outlet ducts.

The mixture contains a fuel that generally is petrol, diesel oil, natural gas or LPG, but can also be any other type of liquid or gaseous fuel suitable for internal combustion engines.

The mixture also comprises a comburent containing the oxygen required for combustion, which generally is air taken from the environment.

The chemical reaction between fuel and comburent, which produces the thermal energy necessary for the operation of the engine, takes place inside the combustion chamber.

The main drawback posed by the internal combustion engines of known type lies in that the combustion gases, which are generally discharged in the environment, contain several polluting substances, including, in particular, carbon oxides, nitrogen oxides, unburnt hydrocarbons and solid particulate.

In particular, the presence of carbon oxides and unburnt hydrocarbons is due to incomplete combustion, ascribable to the lack of oxygen in some areas of the combustion chamber.

A further drawback derives from incomplete combustion, that is, the fact that the fraction of unburnt hydrocarbons is dispersed in the exhaust stage, which negatively affects the efficiency of the engine in terms of energy.

To overcome the above mentioned drawbacks, at least partially, catalytic devices are used, arranged along the exhaust duct and suited to considerably reduce the quantity of carbon oxides, nitrogen oxides and unburnt hydrocarbons present in the exhaust gases before they are introduced in the atmosphere.

This technique, although certainly effective, poses a first drawback that lies in that it cannot eliminate the above mentioned polluting substances completely.

It poses also the drawback that it does not reduce the emissions of solid particulate.

A further drawback lies in that the unburnt hydrocarbons are burnt in the catalytic device, and there is no possibility of recovering its thermal energy to increase the combustion efficiency.

The above technique also poses the drawback represented by the relatively high cost of the catalytic device and the control systems associated with it.

The object of the present invention is to overcome all the drawbacks described above.

In particular, the invention has the first object of increasing the combustion efficiency compared to engines of known type and equivalent potential, reducing the fraction of unburnt hydrocarbons.

The invention has also the object of reducing the quantity of polluting substances present in the exhaust gases compared to the engines of known type.

The objects described above have been achieved by a method in accordance with the main claim, to which the reader should refer for the sake of brevity.

The aims described above have been achieved also through the construction of a water supply system according to claim 10) and of an internal combustion engine according to claim 20).

Other details of the invention are described in the dependent claims.

Advantageously, a more efficient use of the fuel reduces the operating cost of the engine, performance levels being equal.

Improved combustion efficiency also means, advantageously, significant reduction of both polluting gases and solid particulate during the exhaust stage.

Furthermore, advantageously, reducing the polluting gases also means reducing the size of the catalytic device while maintaining the same purifying effect, thus reducing also the cost of the catalytic device compared to the engines of known type.

The above-mentioned objects and advantages will be highlighted in greater detail in the description that follows, which is provided as an example without limitation, with reference to the attached drawings, wherein:
- Figure 1 shows a block diagram of the method of the invention;
- Figure 2 shows a schematic view of the water supply system of the invention applied to an internal combustion engine;
- Figure 3 shows a construction variant of the water supply system carried out according to the invention.

The method that is the subject of the invention is applied to an internal combustion engine comprising at least one combustion chamber associated with fuel mixture delivery ducts and exhaust gas outlet ducts.

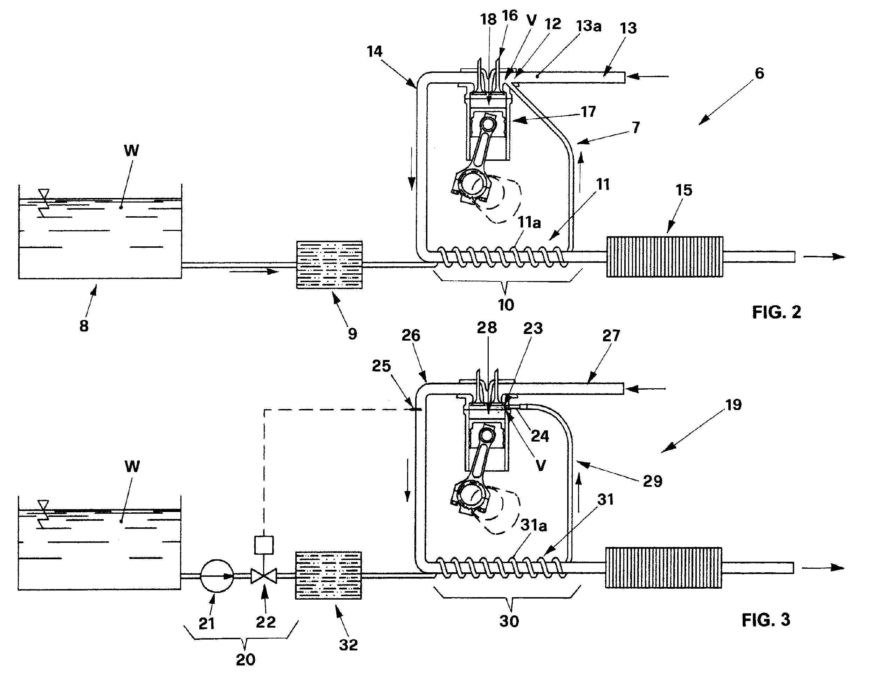

Preferably, but not necessarily, and as schematically illustrated in Figure 2, the above mentioned internal combustion engine will be an explosion engine, of the Otto or diesel type, comprising one ore more cylinders **17**, each one of which defines a corresponding combustion chamber **18**.

The above mentioned mixture contains a fuel, such as petrol, diesel oil, natural gas or LPG, dispersed in a comburent gas containing oxygen that is preferably air taken from the environment.

Obviously, any type of internal combustion engine can be used, and the manufacturer may choose fuels and/or comburents different from those described above, depending on the type of engine.

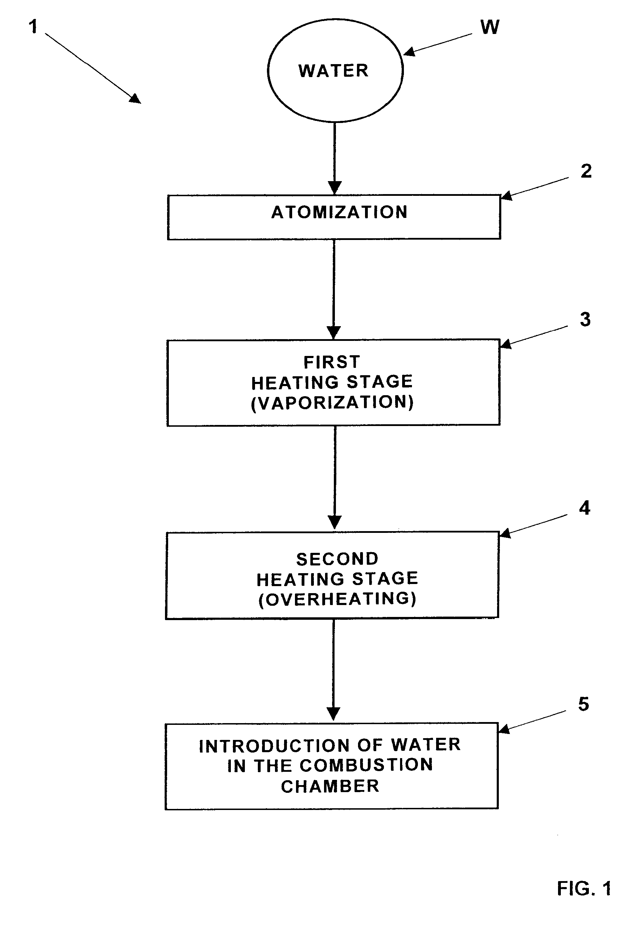

According to the invention, and as shown in Figure 1, the method of the invention, indicated by **1**, includes a stage **5** intended to introduce water **W** in the combustion chamber.

The water introduced in the combustion chamber enriches the fuel mixture with oxygen, thus making it possible to improve the combustion efficiency and achieve one of the objects of the invention.

Preferably, the introduction of water takes place before combustion, with the advantage of facilitating the spreading of water in the fuel mixture.

However, in other construction variants water may be introduced, completely or partially, even during combustion.

The method **1** comprises also a first stage **3** intended to heat water in order to vaporize it before introduction **5** in the combustion chamber.

The above mentioned vaporization advantageously facilitates the spreading of water in the fuel mixture.

Preferably, the method **1** comprises also a second heating stage **4** of the vaporized water, which produces its overheating, with the advantage of ensuring its complete evaporation.

The above mentioned heating stages **3, 4** preferably take place via heat exchange between water and the exhaust gases deriving from the previous combustion.

This advantageously makes it possible to use the residual energy of the exhaust gases at least partially, thus avoiding the supply of thermal energy from the outside, which would affect the overall efficiency of the engine.

On the other hand, the above does not exclude that in other construction variants of the invention the heating stages **3, 4** can be completely or partially carried out with external heating means like, for example, electric resistances.

Preferably, the method **1** comprises a further water atomization stage **2** before the heating stages **3, 4** that, advantageously, makes it possible to break the molecular bonds of water and speed up its vaporization.

Advantageously, this ensures a more effective exploitation of the heat of the exhaust gases, especially considering that the time available for the heating stages **3, 4**, which corresponds to the interval between two consecutive combustions, is extremely limited.

Preferably, the above mentioned atomization stage **2** is carried out through ultrasounds that, advantageously, absorb limited power.

Construction variants of the invention, not represented herein, may also comprise a water pressurization stage carried out before the introduction **5** of water in the combustion chamber.

Advantageously, the pressurization stage makes it possible not only to introduce water more rapidly, but also to adjust its quantity according to the speed and load of the engine, in the ways that are going to be clarified below.

The method **1** of the invention described above is particularly suited to be implemented with a water supply system, represented in Figure 2 and therein indicated as a whole by **6**.

According to the invention, the water supply system **6** comprises means **7** for introducing water **W** in the combustion chamber **18** of an internal combustion engine.

Preferably, but not necessarily, the engine is of the alternative explosion type and is provided with one or more cylinders **17**, only one of which, for the sake of simplicity, is shown in the figure, each one defining a corresponding combustion chamber **18.**

Preferably, but not necessarily, the means **7** for introducing water are operatively connected to a tank **8** of water **W** that advantageously ensures a certain degree of autonomy of the system **6** of the invention, for example when it is applied to the engine of a self-propelled means.

Obviously, the system **6** can also be applied to a fixed engine, in which case the means **7** for introducing water can be fed, for example, directly via the water mains.

The means **7** for introducing water are operatively connected to means **10** for heating the water **W**, suited to obtain its vaporization and, preferably, also its subsequent overheating.

Preferably, the above mentioned heating means **10** comprise means **11** for exchanging heat with the exhaust gases conveyed in the exhaust ducts **14** of the engine.

In particular, the heat exchange means **11** preferably comprise a coil **11a** placed in contact with the exhaust ducts **14**.

Preferably, the system **6** also includes means 9 for atomizing the water **W** like, for example, an ultrasonic atomizer.

As already mentioned, the atomization means **9** advantageously favour the vaporization of the water **W**.

The means 7 for introducing water define a delivery mouth **12,** operatively connected to the fuel mixture delivery ducts **13**.

Preferably, the delivery mouth **12** is connected to the intake manifold **13a** of the engine, in proximity of the intake valves **16.**

In this way, advantageously, steam **V** is introduced in the vortical motion present near the valves **16,** which favours its spreading in the mixture.

Still advantageously, the connection of the delivery mouth **12** to the intake manifold **13a** allows the system **6** of the invention to be applied to a pre-existing engine in a rather simple manner, with no need to make important mechanical modifications to the latter.

It is obvious, however, that in other embodiments of the invention the above mentioned delivery mouth **12** can be arranged differently than described, for example it can be operatively connected to the combustion chamber **18** of the engine, as in the variant illustrated in Figure 3 and therein indicated as a whole by **19**.

As shown in the figure, the delivery mouth **23** of the water supply system **19** belongs to an injector **24** that, advantageously, favours the spreading of the steam **V** in the mixture even further.

Preferably, the injector **24** is an electric injector and is associated with an electronic control unit, not represented herein, connected with sensors for detecting the operating parameters of the engine.

The control unit sets with precision the beginning and duration of the injection according to the operating conditions of the engine, advantageously making it possible to optimize its operation and to reduce steam consumption.

It is evident that, in other embodiments of the invention, the injector **24** can be a mechanical injector instead of an electric injector, or can be of any other known type.

Preferably, the injector **24** is associated with means **20** for adjusting the flow rate of water **W**, which advantageously allow the combustion efficiency to be optimized.

In particular, the above mentioned adjusting means **20** comprise a pump **21** that advantageously allows a larger quantity of water **W** to be introduced.

The above mentioned pump **21** is preferably a variable capacity pump that advantageously allows the flow rate of water **W** to be modified according to the operating parameters of the engine, like for example its speed and power output.

The adjusting means **20** also comprise an on-off valve **22,** controlled by a temperature sensor **25** arranged for example on the exhaust ducts **26**.

Advantageously, the on-off valve **22** makes it possible to interrupt the introduction of water **W** with cold engine, in such a way as to avoid an excessive leaning out of the mixture that would hinder the starting of the engine itself.

Obviously, the engine **24** and/or the above mentioned adjusting means **20** can be applied in an analogous manner even if the water **W** is introduced in the fuel mixture delivery ducts **27**, like in the construction variant shown in Figure 2.

The present invention concerns also a perfected internal combustion engine comprising at least one combustion chamber **18, 28** associated with fuel mixture delivery ducts **13, 27** and exhaust gas outlet ducts **14, 25.**

According to the invention, the engine comprises a water supply system **6, 19** as described above.

The already mentioned Figures 2 and 3 schematically illustrate two different embodiments that, though concerning explosion engines, may be adapted to an internal combustion engine of different type.

In practice, in the case of Figure 2, the vacuum created in the combustion chamber **18** during the normal operation of the engine causes the return of the fuel mixture from the delivery ducts **13** and of the steam **V** from the water supply system **6**.

Combustion, obtained, as known, through a spark or through self-ignition, depending on whether the engine is an Otto engine or a diesel engine, respectively, produces thermal energy that is converted into driving power, furthermore generating hot exhaust gases, conveyed to the exhaust ducts **14.**

The water **W** that flows into the water supply system **6** is first atomized by the atomizer **9** and, then, vaporized and overheated in the coil **11a** placed in contact with the exhaust ducts **14**, at the expense of the heat of the exhaust gases.

Finally, the exhaust gases are preferably conveyed to the catalytic device **15** for purification, before being definitively introduced in the atmosphere.

According to the construction variant shown in Figure 3, the water **W** is pressurized by the pump **21** and directly introduced in the combustion chamber **28** through the injector **24**.

With cold engine, the on-off valve **22** interrupts the supply of water **W**, thus allowing the mixture to be enriched to facilitate the starting of the engine.

As far as other aspects are concerned, operation is analogous to that of the first variant.

According to the results of experiments made by the inventor on an engine provided with the system of the invention, with the same engine performance a reduction in fuel consumption included between 8% and 13% has been observed.

Furthermore, the invention allowed considerable reduction in polluting substances like carbon oxides, nitrogen oxides and unburnt hydrocarbons.

Finally, also a reduction in the emissions of solid particulate has been observed.

In the light of the above considerations, the invention achieves all the previously-stated objects.

In particular, the invention achieves the object of increasing combustion efficiency and, consequently, the overall efficiency of the engine.

The invention also achieves the object of reducing the quantity of polluting substances present in the exhaust gases.

On implementation, the method, the system and the engine that are the subjects of the invention may undergo changes that, though not illustrated or described herein, shall nonetheless be covered by the present patent, provided that they come within the scope of the claims that follow.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Method (1) for increasing the efficiency of an internal combustion engine comprising at least one combustion chamber associated with fuel mixture delivery ducts and exhaust gas outlet ducts, **characterized in that** it includes a stage (5) for introducing water (W) in said combustion chamber.

2. Method (1) according to claim 1), **characterized in that** said stage (5) for introducing water takes place, at least partially, before said combustion.

3. Method (1) according to any of the preceding claims, **characterized in that** said stage (5) for introducing water takes place, at least partially, during said combustion.

4. Method (1) according to any of the preceding claims, **characterized in that** it comprises at least a first heating stage (3) for vaporizing said water before said introduction (5) in the combustion chamber.

5. Method (1) according to claim 4), **characterized in that** it comprises also a second heating stage (4) for overheating said steam before said introduction (5) in the combustion chamber.

6. Method (1) according to any of the claims 4) or 5), **characterized in that** at least one of said heating stages (3, 4) takes place through heat exchange with said exhaust gases.

7. Method (1) according to any of the claims from 2) to 6), **characterized in that** it comprises also a stage (2) for atomizing said water before said first heating stage (3).

8. Method (1) according to claim 7), **characterized in that** said atomization stage (2) is carried out through ultrasounds.

9. Method (1) according to any of the preceding claims, **characterized in that** it comprises a stage for pressurizing said water before said introduction (5) in said combustion chamber.

10. Water supply system (6; 19) to an internal combustion engine comprising at least one combustion chamber (18; 28) associated with fuel mixture delivery ducts (13; 27) and exhaust gas outlet ducts (14; 25), **characterized in that** it comprises means (7; 29) for introducing said water (W) in said combustion chamber (18; 28).

11. Water supply system (6; 19) according to claim 10), **characterized in that** it also comprises means (10; 30) for heating said water (W).

12. Water supply system (6; 19) according to claim 11), **characterized in that** said heating means (10; 30) comprise means (11; 31) for exchanging heat with said exhaust gases.

13. Water supply system (6; 19) according to any of the claims 11) or 12), **characterized in that** it also comprises means (9; 32) for atomizing said water (W).

14. Water supply system (6; 19) according to claim 13), **characterized in that** said atomization means (9; 32) comprise an ultrasonic atomizer.

15. Water supply system (6) according to any of the claims from 10) to 14), **characterized in that** said means (7) for introducing water define at least one delivery mouth (12) operatively connected to said delivery ducts (13) of said fuel mixture.

16. Water supply system (19) according to any of the claims from 10) to 14), **characterized in that** said means (29) for introducing water define at least one delivery mouth (23) operatively connected to said combustion chamber (28).

17. Water supply system (19) according to any of the claims 15) or 16), **characterized in that** it comprises an injector (24) provided with said delivery mouth (23).

18. Water supply system (19) according to claim 17), **characterized in that** said injector (24) is an electric injector.

19. Water supply system (19) according to any of the claims from 10) to 18), **characterized in that** it comprises means (20) for adjusting the flow rate of said water (W), associated with said means (29) for introducing water.

20. Internal combustion engine comprising at least one combustion chamber (18; 28) associated with fuel mixture delivery ducts (13; 27) and exhaust gas outlet ducts (14; 26), **characterized in that** it comprises a water supply system (6; 19) according to any of the claims from 10) to 19).

21. Internal combustion engine according to claim 20), **characterized in that** it is an explosion engine.
